# EUROPEAN PATENT APPLICATION

(11) **EP 4 421 532 A1**
(43) Date of publication of application: **28.08.2024**
(21) Application number: 24152314.1
(22) Date of filing: 17.01.2024
(51) Int. Cl.: G01S 19/14, G01S 19/22, G01S 19/28

(54) **IMPROVED SATELLITE SELECTION FOR A ROBOTIC WORK TOOL SYSTEM**

(30) Priority: 21.02.2023 SE 2350197
(71) Applicant: Husqvarna AB, 561 82 Huskvarna (SE)
(72) Inventor: OLOFSSON, Johan, Huskvarna (SE); HECKTOR, Ulrik, Huskvarna (SE)

(57) **Abstract**

A robotic work tool system (300) comprising a robotic work tool (100) arranged to operate in an operational area (305), the robotic work tool (100) comprising a satellite navigation sensor (175), the robotic work tool system comprising a controller (110) configured to: determine a position of the robotic work tool (100), receive a position of one or more satellites, determine one or more directions prone to multipath propagation, and deselect one or more of the one or more satellites based on the direction to the satellite from the position of the robotic work tool (100) being in a direction prone to multipath propagation.

## Description

### TECHNICAL FIELD

This application relates to a system and a method for providing an improved satellite selection for robotic work tools, such as lawnmowers, in such a system, and in particular to a system and a method for providing an improved reception of satellite signals in a robotic work tool system.

### BACKGROUND

Automated or robotic work tools such as robotic lawnmowers are becoming increasingly more popular and so is the use of the robotic work tool in various types of operational areas. At the same time, robotic work tools are becoming more and more reliant on satellite navigation, such as in GPS (Global Positioning System) or GNSS systems. However, as is known, in many types of environments - especially environments where there are trees and other structures, such as in a garden in a populated area - there are areas where satellite reception is compromised, limited or even blocked. In such systems, the robotic work tool is not able to operate to its full capacity if not always in line of sight with a plurality of satellites.

Traditionally satellite navigation is based on selecting and utilizing signals from as many available (or visible) satellites in order to increase the accuracy of the determination of a current position.

Prior solutions have been provided where the positions of satellites and/or positions of blocking structures are retrieved, either from a local memory storage or from a remote storage such as through a server, in order to ensure that the robotic work tool is operating in an area where the most - or at least many - satellites are visible so as to ensure a high accuracy.

However, the inventors have realized that not only may the accuracy suffer from signals being blocked, but the accuracy may also suffer from multipath propagation.

Thus, there is a need for an improved manner of providing the advanced functionality of utilizing satellite navigation even in areas where multipath propagation may occur.

### SUMMARY

The inventors are proposing to achieve this by going against the prevalent prejudice of utilizing as many satellites as possible at a time and only selecting a subset of available satellites by deselecting the satellites which are in directions prone to multipath propagation.

It is therefore an object of the teachings of this application to overcome or at least reduce those problems by providing a robotic work tool system comprising a robotic work tool system comprising a robotic work tool arranged to operate in an operational area, the robotic work tool comprising a satellite navigation sensor, the robotic work tool system comprising a controller configured to: determine a position of the robotic work tool, receive a position of one or more satellites, determine one or more directions prone to multipath propagation, and deselect one or more of the one or more satellites based on the direction to the satellite from the position of the robotic work tool being in a direction prone to multipath propagation.

By selectively deselecting satellites which are available, thereby relying only on a subset of satellites the inventors are providing for an increased accuracy in that the introduction of multipath propagation would otherwise reduce the accuracy.

This has the benefit that the robotic work tool is made aware of its environment and deselects the satellites that would otherwise reduce or risk to the accuracy of the satellite navigation sensor.

In some embodiments the controller is further configured to determine one or more directions prone to multipath propagation based on a map of the operational area showing one or more features that may cause multipath propagation.

In some embodiments a feature is a structure, one or more trees or a body of water.

In some embodiments a feature is a feature that reached a threshold height.

In some embodiments a feature is an area where atmospheric ducting, ionospheric reflection or ionospheric refraction can occur.

In some embodiments a feature is a topological feature.

In some embodiments a direction prone to multipath propagation is a direction that lie within a threshold angular distance from a feature.

In some embodiments the controller is further configured to determine the directions for the position of the robotic work tool and compared to the directions of the satellite(s).

In some embodiments the controller is further configured to determine the direction for a specific satellite(s).

In some embodiments the controller is further configured to decrease the gain of the satellite navigation sensor in one or more of the directions prone to multipath propagation.

In some embodiments the controller is further configured to decrease the gain when a number of satellites available is below a threshold number of utilized satellites.

In some embodiments the robotic work tool is a robotic lawnmower.

It is also an object of the teachings of this application to overcome the problems by providing a method for use in robotic work tool system comprising a robotic work tool arranged to operate in an operational area, the robotic work tool comprising a satellite navigation sensor, the method comprising: determining a position of the robotic work tool, receiving a position of one or more satellites, determining one or more directions prone to multipath propagation, and deselecting one or more of the one or more satellites based on the direction to the satellite from the position of the robotic work tool being in a direction prone to multipath propagation.

It is also an object of the teachings of this application to overcome the problems by providing a computer-readable medium carrying computer instructions that when loaded into and executed by a controller of a robotic work tool enables the robotic work tool to implement the method according to herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system wherein several satellites are shown are visible indicating a problem to be solved;
Figure 3 shows a schematic view of a robotic work tool system according to some example embodiments of the teachings herein;
Figure 4 shows a corresponding flowchart for a method according to some example embodiments of the teachings herein; and
Figure 5 shows a schematic view of a computer-readable medium carrying computer instructions according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

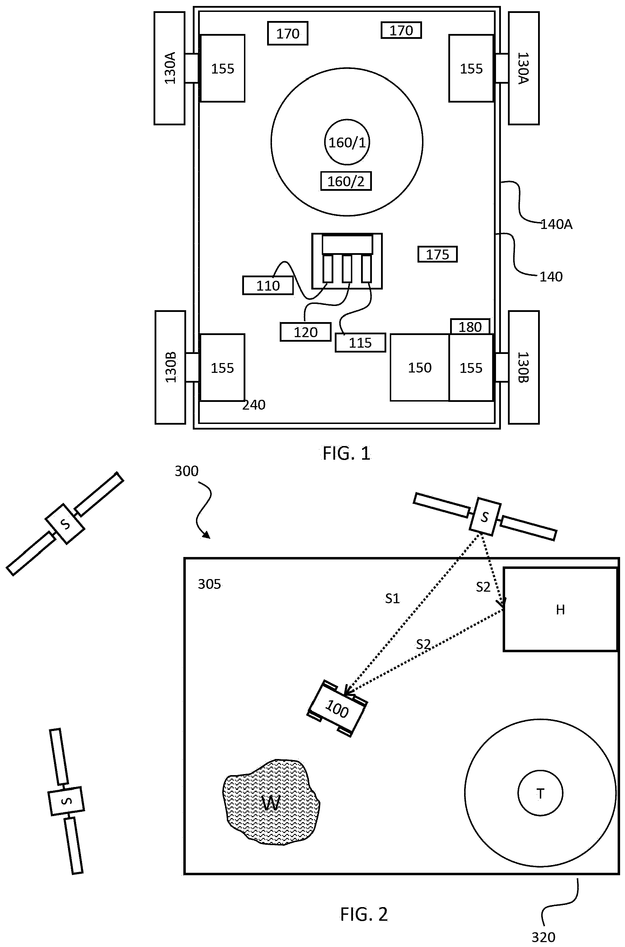

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers, outdoor debris remover using a suction- or picking device as its work tool to mention a few examples.

In some embodiments, and as will be discussed below, the robotic work tool is a semi-controlled or at least supervised autonomous work tool, such as farming equipment or large lawnmowers, for example riders or comprising tractors being autonomously controlled.

It should also be noted that the robotic work tool is a self-propelled robotic work tool, capable of autonomous navigation within a operational area, where the robotic work tool propels itself across or around the operational area in a pattern (random or predetermined).

The robotic work tool 100, exemplified as a robotic lawnmower 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

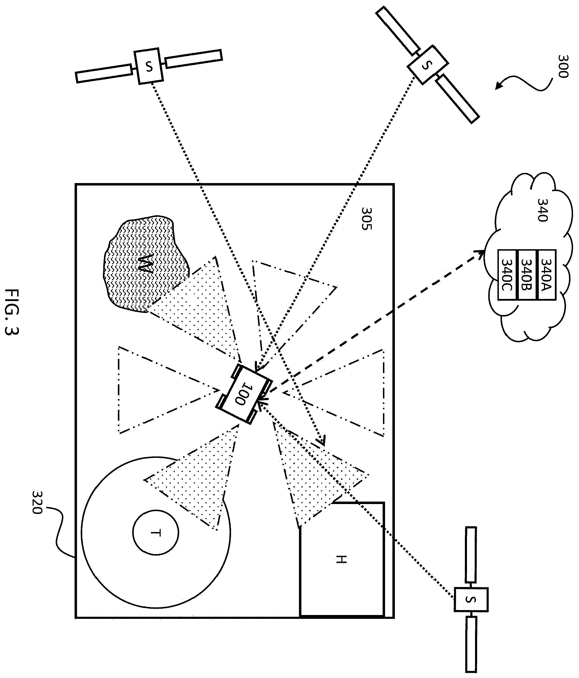

The robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but assumed to be one example of a server) for providing information regarding status, location, and progress of operation to the user equipment as well as receiving commands or settings from the user equipment. Alternatively or additionally, the robotic lawnmower 100 may be arranged to communicate with a server (referenced 340 in figure 3) for providing information regarding status, location, and progress of operation as well as receiving commands or settings.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

The robotic lawnmower 100 comprises at least one satellite signal navigation sensor 175 configured to provide navigational information (such as position) based on receiving one or more signals from a satellite - possibly in combination with receiving a signal from a base station. In some embodiments the satellite navigation sensor 175 is a GPS (Global Positioning System) device or other Global Navigation Satellite System (GNSS) device. In some embodiments the satellite navigation sensor 175 is a RTK sensor.

The robotic work tool is thereby enabled to operate in an operational area bounded by virtual borders (referenced 320 in figure 3).

In some embodiments, the satellite navigation sensor is arranged with an antenna for which the gain can be increased or decreased in one or more directions.

The robotic lawnmower 100 may also or alternatively comprise deduced reckoning sensors 180. The deduced reckoning sensors may be odometers, accelerometer or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

For enabling the robotic lawnmower 100 to navigate with reference to a wire, such as a boundary wire or a guide wire, emitting a magnetic field caused by a control signal transmitted through the wire, the robotic lawnmower 100 is in some embodiments configured to have at least one magnetic field sensor 170 arranged to detect the magnetic field and for detecting the wire and/or for receiving (and possibly also sending) information to/from a signal generator. In some embodiments, such a magnetic boundary may be used to supplement navigation according to virtual borders.

The robotic lawnmower 100 is in some embodiments arranged to operate according to a map application representing one or more operational areas (and possibly the surroundings of the operational area(s)) as well as features of the operational area(s) stored in the memory 120 of the robotic lawnmower 100. The map thus shows the environment of the operational area(s). In some embodiments, the map is also or alternatively stored in the memory of a server.

In some embodiments, the map application may be generated or supplemented as the robotic lawnmower 100 operates or otherwise moves around in the operational area. In some embodiments the map application may be generated remotely in the server, possibly based on a map application or map service, such as Google Maps^{™} to mention one example, for providing a satellite or other map overview of the operational area.

As a skilled person would understand, the map may be generated in a number of different manners and the exact manner of generating the map is not at the core of the teachings herein. What is at the core is that the map shows features in the operational area and possibly also surrounding the operational area.

In some embodiments, the robotic work tool 100 is arranged to navigate according to the map based on the satellite navigation sensor 175.

As the operational area is oftentimes outdoors, the robotic work tool is, in some embodiments, arranged or configured to traverse and operate in operational areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a operational area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in a operational area that contains obstacles that are overhanging, i.e. obstacles that may not be detectable from the ground up, such as low hanging branches of trees or bushes. Such a garden is thus not simply a flat lawn to be mowed or similar, but an operational area of unpredictable structure and characteristics. The operational area exemplified with referenced to figure 3, may thus be such a nonuniform operational area as disclosed in this paragraph that the robotic work tool is arranged to traverse and/or operate in.

Figure 2 shows a robotic work tool system 300. The schematic view is not to scale. The robotic work tool system 300 comprises one or more robotic work tools 100 according to the teachings herein arranged to operate in one or more operational areas 305 bounded by a boundary 320. It should be noted that the operational area 305 shown in figure 2 is simplified for illustrative purposes.

As is illustrated, a number of satellites S are visible (or available) to the robotic work tool 100 assumingly at any given time. However, as the inventors have realized, some of these satellites will be at positions where their signals are experiencing multipath propagation.

Multipath propagation is the propagation phenomenon that results in radio signals reaching the receiving GPS sensor by two or more paths. Causes of multipath include atmospheric ducting, ionospheric reflection and refraction, and reflection from water bodies and terrestrial objects such as mountains and buildings. When the same signal is received over more than one path, it can create interference and phase shifting of the signal. Destructive interference causes fading; this may cause a radio signal to become too weak in certain areas to be received adequately. For this reason, this effect is also known as multipath interference or multipath distortion.

In figure 2 it is indicated how signals from one satellite reaches the robotic work tool 100 through two different signal paths referenced S1 and S2 and - as the inventors have realized - by basing the determination of position on the signals received from this satellite actually harms or reduces the accuracy of the position determination.

The inventors are therefore proposing to deselect satellites, that are actually visible, but are placed at locations that are prone to suffer from multipath propagation.

Figure 3 shows a schematic view of a robotic work tool system 300 as in figure 2 comprising one or more robotic work tool(s) 100 as in figure 1. The robotic work tool 100 may be connected to a server 340. The server may be part of a cloud service or it may be a (local) user equipment. The server 340 comprises a controller 340A for controlling the operation of the server 340, a memory 340B for storing instructions and data relating to the operation of the server 340 and a communication interface 340C for enabling the server 340 to communicate with other devices, such as the robotic work tool 100. The controller, the memory and the communication interface may be of similar types as discussed in relation to figure 1 for the robotic work tool 100.

As is shown in figure 2 and figure 3 there may be features such as houses (H), structures, trees (T) or even bodies of water (W) to mention a few examples that may cause or incur multipath propagation. It should be noted that other features than those mentioned here that may also cause multipath propagation.

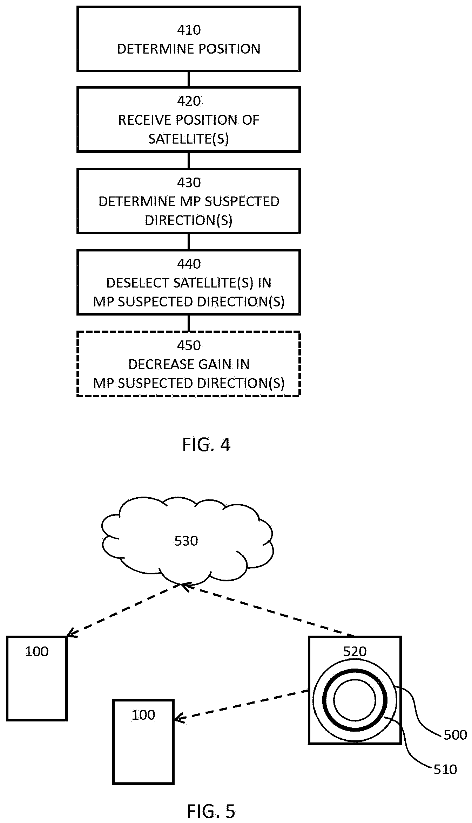

Figure 4 shows a flowchart for a general method according to herein. The method is for use in a robotic work tool system as in figure 1 in a manner that will be discussed with simultaneous reference to figure 3. The method comprises a controller of the robotic work tool system, such as the controller 110 of the robotic work tool 100 determining 410 its position. The position is in some embodiment determined as a current position utilizing the satellite navigation sensor 175. Alternatively or additionally, the position is determined as a (future) position based on an operating schedule indicating times for operating an planned operating patterns and/or operating areas.

The robotic work tool 100 also receives 420 positions of satellites. The positions of the satellites, in some embodiment, indicate the positions of one or more satellites at the time the position of the robotic work tool is determined. Alternatively or additionally, the positions of the satellites, in some embodiment, indicate the positions of one or more satellites at a (future) time based on an operating schedule indicating times for operating an planned operating patterns and/or operating areas.

The positions of the satellites are, in some embodiments, received from the server from a service provider, possibly based on a request for satellite positions. Alternatively or additionally, the positions of the satellites are, in some embodiment, received from the local memory 120 wherein the positions of satellite(s) are stored during operation or otherwise during map generation. By storing the position of satellites - possibly after having received them before - the amount of data traffic can be reduced.

The robotic work tool also determines directions 430 emanating from the position of the robotic work tool 100, which positions are deemed suspected of incurring multipath propagation. Such directions are directions that lie within a threshold (angular) distance from (or within) a feature. In some embodiments the threshold (angular) distance is 1, 5, 10, 15 or 20 degrees or any interval therein between.

In some embodiments the features are houses (as an example of a structure), trees (including bushes, being examples of vegetation) or bodies of water.

In some embodiments the features are features that reach a certain threshold height. In some embodiments the threshold height is 1, 1.5, 2, 2.5 or 5 meters or any interval therein between.

In some embodiments the features are topological features such as hills, or slopes.

In some embodiments the features are areas where atmospheric ducting, ionospheric reflection or refraction may occur. In some embodiment, the robotic work tool 100 may receive information of such areas from a service through the server 340.

In figure 3 there is indicated different directions (by the triangles) wherein three (general) directions are indicated to be suspected of multipath propagation (dotted triangles) and three are indicated to be assumingly free of multipath propagation (empty triangles). It should be noted that even though the directions are indicated in figure 3 as being zones or ranges of directions, this is only one example and the directions may be any range of directions or individual directions.

The robotic work tool 100 then determines one or more satellites that are in these multipath prone directions and deselects 440 those satellites.

In some embodiments, the directions are determined for a position of the robotic work tool 100 and later compared to the directions of the satellite(s).

In some embodiments, the directions are determined for a specific satellite(s).

This enables the robotic work tool 100 to navigate utilizing fewer satellites, but only relying on satellites that are (assumed to be) free of interference caused by multipath propagation.

The deselection of satellites may be performed so that only a subset of available satellites are selected, whereby the rest are deselected.

In some such embodiments, the subset is selected to be the satellites being at directions furthest (or further) away from any feature assumed to introduce multipath propagation. In some such embodiments, the number of selected satellites is 4, 8, 16, 32 or any interval thereinbetween.

In some alternative or additional such embodiments, the subset is selected to be the satellites having the highest (or higher) signal-to-noise ratio. In some such embodiments, the number of selected satellites is 4, 8, 16, 32 or any interval thereinbetween.

In some embodiments the robotic work tool 100 is further configured to decrease 450 the gain of the satellite navigation sensor 175 in one or more directions where there is a risk of multipath propagation. As is indicated in figure 4, the decrease of the gain is optional.

In some such embodiments, the gain is decreased when the number of satellites available after some has been deselected is below a threshold number of utilized satellites, the decreased gain then allowing a satellite that would otherwise be deselected, to be utilized bringing the number of utilized antennas above the threshold number again. In some such embodiments, the number of utilized satellites is 4, 8, 16, 32 or any interval thereinbetween.

In some such alternative or additional embodiments, the gain is decreased irrespective of the number of satellites that are deselected.

Figure 5 shows a schematic view of a computer-readable medium 500 carrying computer instructions 510 that when loaded into and executed by a controller of a robotic work tool 100, enables the robotic work tool to implement the present invention. The computer-readable medium 500 may be tangible such as a hard drive or a flash memory, for example a USB memory stick or a cloud server. Alternatively, the computer-readable medium 500 may be intangible such as a signal carrying the computer instructions enabling the computer instructions to be downloaded through a network connection, such as an internet connection. In the example of figure 5, a computer-readable medium 500 is shown as being a hard drive or computer disc 500 carrying computer-readable computer instructions 510, being inserted in a computer disc reader 520. The computer disc reader 520 may be part of a cloud server 530 - or other server - or the computer disc reader 520 may be connected to a cloud server 530 - or other server. The cloud server 530 may be part of the internet or at least connected to the internet. The cloud server 530 may alternatively be connected through a proprietary or dedicated connection. In one example embodiment, the computer instructions are stored at a remote server 530 and be downloaded to the memory 120 of the robotic work tool 100 for being executed by the controller 110.

The computer disc reader 520 may also or alternatively be connected to (or possibly inserted into) a robotic work tool 100 for transferring the computer-readable computer instructions 510 to a controller of the robotic work tool 100 (presumably via a memory of the robotic work tool 100).

Figure 5 shows both the situation when a robotic work tool 100 receives the computer-readable computer instructions 510 via a server connection and the situation when another robotic work tool 100 receives the computer-readable computer instructions 510 through a wired interface. This enables for computer-readable computer instructions 510 being downloaded into a robotic work tool 100 thereby enabling the robotic work tool 100 to operate according to and implement the invention as disclosed herein.

## Claims

1. A robotic work tool system (300) comprising a robotic work tool (100) arranged to operate in an operational area (305), the robotic work tool (100) comprising a satellite navigation sensor (175), the robotic work tool system comprising a controller (110) configured to:
determine a position of the robotic work tool (100),
receive a position of one or more satellites,
determine one or more directions prone to multipath propagation, and
deselect one or more of the one or more satellites based on the direction to the satellite from the position of the robotic work tool (100) being in a direction prone to multipath propagation.

2. The robotic work tool system (300) according to claim 1, wherein the controller (110) is further configured to determine one or more directions prone to multipath propagation based on a map of the operational area (305) showing one or more features that may cause multipath propagation.

3. The robotic work tool system (300) according to claim 2, wherein a feature is a structure, one or more trees or a body of water.

4. The robotic work tool system (300) according to claim 3, wherein a feature is a feature that reached a threshold height.

5. The robotic work tool system (300) according to any of claims 2 to 4, wherein a feature is an area where atmospheric ducting, ionospheric reflection or ionospheric refraction can occur.

6. The robotic work tool system (300) according to any of claims 2 to 5, wherein a feature is a topological feature.

7. The robotic work tool system (300) according to any of claims 2 to 6, wherein a direction prone to multipath propagation is a direction that lie within a threshold angular distance from a feature.

8. The robotic work tool system (300) according to any preceding claim, wherein the controller (110) is further configured to determine the directions for the position of the robotic work tool (100) and compared to the directions of the satellite(s).

9. The robotic work tool system (300) according to any preceding claim, wherein the controller (110) is further configured to determine the direction for a specific satellite(s).

10. The robotic work tool system (300) according to any preceding claim, wherein the controller (110) is further configured to
decrease the gain of the satellite navigation sensor (175) in one or more of the directions prone to multipath propagation.

11. The robotic work tool system (300) according to claim 10, wherein the controller (110) is further configured to
decrease the gain when a number of satellites available is below a threshold number of utilized satellites.

12. The robotic work tool system (300) according to any preceding claim, wherein the robotic work tool (100) is a robotic lawnmower (100).

13. A method for robotic work tool system (300) comprising a robotic work tool (100) arranged to operate in an operational area (305), the robotic work tool (100) comprising a satellite navigation sensor (175), the method comprising:
determining a position of the robotic work tool (100),
receiving a position of one or more satellites,
determining one or more directions prone to multipath propagation, and
deselecting one or more of the one or more satellites based on the direction to the satellite from the position of the robotic work tool (100) being in a direction prone to multipath propagation.

14. A computer-readable medium (500) carrying computer instructions (510) that when loaded into and executed by a controller (110) of a robotic work tool (100) enables the robotic work tool (100) to implement the method according to claim 13.
